# EUROPEAN PATENT APPLICATION

(11) **EP 1 163 829 A1**
(43) Date of publication of application: **19.12.2001**
(21) Application number: 01201877.6
(22) Date of filing: 18.05.2001
(51) Int. Cl.: A01B 59/043

(54) **An assembly of a vehicle and an agricultural machine, agricultural machine suitable for use in such an assembly**

(30) Priority: 14.06.2000 NL 1015434
(71) Applicant: Lely Enterprises AG, 6300 ZUG (CH)
(72) Inventor: Koorn, Maarten, 3123 CP Schiedam (NL)
(74) Representative: Corten, Maurice Jean F.M.

(57) **Abstract**

An assembly of a vehicle (1), a pulling vehicle for example, and an agricultural machine (2). The vehicle (1) is provided with fastening points (11,12). The agricultural machine (2) is provided with a drawbar (5) with two ends (7,8), and with a lifting bar (3) with a drawing point (4). The drawbar (5) is fastened to the drawing point (4). The lifting bar (3) is detachably fastened to the fastening points (11,12). The drawing point (4) is movable, such as shiftable for example. The drawbar (5) is fastened to the drawing point (4) at a point located between the two ends (7,8). An agricultural machine (2) provided with a lifting bar (3) with a drawing point (4), and with a drawbar (5), said agricultural machine being suitable for use in such an assembly.

## Description

The invention relates to an assembly of a vehicle, a pulling vehicle for example, and an agricultural machine.

Such assemblies have been used in practice for years already, the vehicle being constituted for example by a pulling vehicle, e.g. a tractor, and the agricultural machine being constituted for example by a mowing machine, a trailer or the like.

It is an object of the invention to provide an alternative assembly by means of which it is possible for the assembly to make turns, in particular sharp turns, the risk that the agricultural machine runs against the wheels or tires of the pulling vehicle being small.

It is a further object of the invention to provide an alternative assembly in which a drawbar of relatively small length can be applied, which contributes to a good manoeuvrability of the assembly.

It is still a further object of the invention to provide an alternative assembly in which an accurate forward movement of the agricultural machine can be obtained which is at least for the greater part independent of inter alia the weight of the agricultural machine, the soil condition and the like.

For that purpose, according to a first aspect of the invention, there is provided an assembly of a vehicle, a pulling vehicle for example, and an agricultural machine, the vehicle being provided with fastening points, the agricultural machine being provided with a drawbar with two ends, and with a lifting bar with a drawing point, the drawbar being fastened to the drawing point, the lifting bar being detachably fastened to the fastening points, the drawing point being movable, such as shiftable for example, the drawbar being fastened to the drawing point at a point located between the two ends. Because of the fact that the drawing point is movable, during making turns the drawing point can be shifted to the inside of the turn, so that the agricultural machine, viewed laterally, is located at a greater distance from the pulling vehicle for example, and the risk of running of the agricultural machine against the pulling vehicle is avoided or reduced. Thus it is possible to make a relatively sharp turn with a drawbar having a small length. Because of the fact that the drawbar is fastened to the drawing point at a point located between the two ends, there is created a lever by means of which the shifting of the drawing point can take place accurately, while moreover small forces are exerted on the lifting bar. In this manner it is possible for the agricultural machine to control itself the shifting of the drawing point.

For that purpose, according to a second aspect of the invention, there is provided an assembly of a vehicle, a pulling vehicle for example, and an agricultural machine, said vehicle being provided with fastening points, the agricultural machine being provided with a lifting bar with a drawing point, the lifting bar being detachably fastened to the fastening points, the drawing point being movable, such as shiftable for example, the agricultural machine being provided with driven means for shifting the drawing point, the agricultural machine being provided with measuring means for measuring the angle enclosed by the drawbar and the lifting bar, and the driven means being controlled with the aid of data from the measuring means. The driven means, e.g. a controlled hydraulic cylinder, enable a shifting of the drawing point which is independent of inter alia the weight of the agricultural machine, the soil condition and the like and which takes the angle enclosed by the drawbar and the lifting bar into account. In this case it is advantageous when a drawbar of the agricultural machine has two ends and the drawbar is fastened to the drawing point at a point located between the two ends. Because of the fact that the drawbar is fastened to the drawing point at a point located between the two ends there is created a lever so that the shifting of the drawing point can take place accurately, while moreover small forces are exerted on the lifting bar.

In an embodiment of the invention the drawing point is shiftably disposed on the lifting bar. As an alternative the drawing point may be mounted on an other construction, for example near the lifting bar.

A simple construction is obtained when the drawing point is mounted on a sleeve-shaped element which is shiftably disposed on the lifting bar.

When the agricultural machine is fastened to one of the two ends of the drawbar and fastening means are on the one hand hingeably connected to the other end of the drawbar and are on the other hand hingeably connected to the lifting bar, the shifting of the drawing point can simply take place automatically and the shifting of the drawing point is promoted by the agricultural machine itself.

In an embodiment of an assembly according to the invention the fastening means, upon shifting of the drawing point, allow the other end of the drawbar to make a movement in which it describes an arc of a circle.

For the purpose of obtaining a correct shifting of the drawing point, independently of inter alia the weight of the agricultural machine, the soil condition and the like, in an embodiment of an assembly according to the first aspect of the invention, the agricultural machine is provided with driven means for shifting the drawing point. These driven means could be controlled for example by the steering device of the pulling vehicle, by using a suitable coupling. However, the agricultural machine is preferably provided with measuring means for measuring the angle enclosed by the drawbar and the lifting bar, the driven means being controlled with the aid of data from the measuring means.

An assembly with a high degree of manoeuvrability is obtained when the lifting bar is curved, the convex side of the curved lifting bar facing away from one end of the drawbar. In this manner the agricultural machine can be coupled to the pulling vehicle at a minimum distance, which enhances the manoeuvrability, while moreover relatively sharp turns can be made.

The present invention further relates to an agricultural machine provided with a lifting bar with a drawing point, and with a drawbar that is fastened to the drawing point, said agricultural machine being suitable for use in an assembly according to the invention.

The invention will be explained hereinafter in further detail on the basis of an exemplary, non-limiting embodiment which is shown in the drawing.

Figure 1 is a schematic plan view of an assembly of a vehicle and an agricultural machine in a position in which the assembly is capable of moving straight on, and

Figure 2 is a schematic plan view of an assembly of a vehicle and an agricultural machine in a position in which the assembly is capable of making a turn.

The invention will be elucidated hereinafter on the basis of an assembly of a vehicle 1, in particular but not exclusively a pulling vehicle, with fastening points 11 and 12, and an agricultural machine 2 fastened thereto, in particular but not exclusively drawn thereby. The agricultural machine 2 is provided with a lifting bar 3 with a drawing point 4, the lifting bar 3 being detachably fastened to the fastening points 11, 12.

The pulling vehicle may be constituted, for example but not exclusively, by a tractor that pulls the agricultural machine, for example a mowing machine, a trailer or the like.

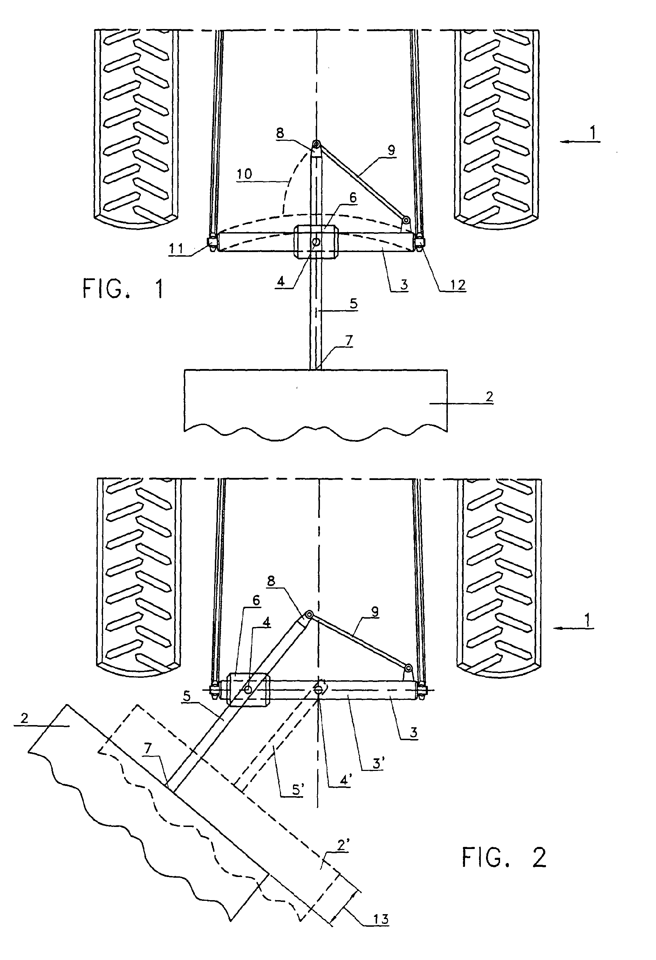

Contrary to the invention, the drawing point 4' (as schematically indicated in Figure 2 by interrupted lines) may be fastened at one place to the lifting bar 3'. As a result thereof, when a sharp turn is made, there is a large risk that the agricultural machine 2' runs against the wheels or tires of the pulling vehicle, which is undesirable.

Said disadvantage has been solved in an assembly according to the invention by designing the drawing point 4 as a shiftable one, for example by disposing it shiftably on the lifting bar 3. The effect of this shiftability can clearly be observed by comparing Figure 1, in which an assembly of a pulling vehicle 1 and an agricultural machine 2 drawn thereby is shown in a position in which the assembly is capable of moving straight on, with Figure 2, in which the assembly is shown in a position in which it is capable of making a turn. As a result of its shiftability, during making turns the drawing point 4 is shifted to the inside of the turn, so that, in comparison with the known situation, the agricultural machine 2, viewed laterally, is located at a greater distance from the pulling vehicle 1. The risk of running of the agricultural machine 2 against the pulling vehicle 1 is thus avoided or at least reduced. An additional advantage of a shorter drawbar length is that the agricultural machine will better follow the ground, which is inter alia advantageous to raking machines with rotors. With so-called offset machines, such as e.g. a drawn mowing machine which may be located on two sides behind the pulling vehicle, a further advantage of shifting of the drawing point is a better distribution of the centre of gravity, which leads to a better stability of the offset machine.

Thus it is possible to make a relatively sharp turn by means of a drawbar 5 having a small length. In comparison with the situation in which the drawing point 4' is fixed, there is obtained a gain in drawbar length 13, as shown schematically in Figure 2.

The drawing point 4 can be made shiftable in a simple manner, for example by mounting it on a sleeve-shaped element 6 which is shiftably disposed on the lifting bar 3. It is noticed that the lifting bar 3 may advantageously be designed as a curved one, as shown by interrupted lines in Figure 1. Said curvature makes it possible for the agricultural machine 2 to be located close to the pulling vehicle 1.

Although it is possible that the drawbar 5 is fastened with one end to the drawing point 4, it is constructively advantageous when the drawbar 5 is fastened to the drawing point 4 at a point located between the two ends 7, 8 of the drawbar 5.

The automatic shifting of the drawing point 4 across the lifting bar 3 can be promoted when fastening means 9, constituted, for example but not exclusively, by one or more bars, "stabilo" constructions or the like, are on the one hand hingeably fastened to the end 8 of the drawbar 5 and are on the other hand hingeably connected to the lifting bar 3. Because of this the agricultural machine 2 in fact itself controls the shifting of the drawing point 4, and as a result of the shifting of the drawing point 4 the centre of gravity is shifted as well. Upon shifting of the drawing point 4, the fastening means 9 preferably allow the end 8 of the drawbar 5 to make a movement in which it describes an arc 10 of a circle, as shown in Figure 1.

A shifting of the drawing point 4 which takes place independently of inter alia the weight of the agricultural machine, the soil condition and the like, is obtained when the agricultural machine 2 is provided with driven means, such as a hydraulic cylinder for example, for shifting the drawing point 4. These driven means are preferably controlled or operated with the aid of data obtained from measuring means which are present on the agricultural machine 2, such as (non-shown) sensors, known per se, for measuring the angle enclosed by the drawbar 5 and the lifting bar 3.

The invention further relates to an agricultural machine which is provided with a lifting bar with a drawing point, and with a drawbar that is fastened to the drawing point, said agricultural machine being suitable for use in an assembly according to the invention.

## Claims

1. An assembly of a vehicle (1), a pulling vehicle for example, and an agricultural machine (2), said vehicle (1) being provided with fastening points (11, 12), the agricultural machine (2) being provided with a drawbar (5) with two ends (7, 8), and with a lifting bar (3) with a drawing point (4), the drawbar (5) being fastened to the drawing point (4), the lifting bar (3) being detachably fastened to the fastening points (11, 12), the drawing point (4) being movable, such as shiftable for example, the drawbar (5) being fastened to the drawing point (4) at a point located between the two ends (7, 8).

2. An assembly of a vehicle (1), a pulling vehicle for example, and an agricultural machine (2), said vehicle (1) being provided with fastening points (11, 12), the agricultural machine (2) being provided with a drawbar (5) with two ends (7, 8), and with a lifting bar (3) with a drawing point (4), the lifting bar (3) being detachably fastened to the fastening points (11, 12), the drawing point (4) being movable, such as shiftable for example, the agricultural machine (2) being provided with driven means for shifting the drawing point (4), the agricultural machine being provided with measuring means for measuring the angle enclosed by the drawbar (5) and the lifting bar (3), and the driven means being controlled with the aid of data from the measuring means.

3. An assembly as claimed in claim 2, **characterized in that** a drawbar (5) of the agricultural machine (2) has two ends (7, 8) and **in that** the drawbar (5) is fastened to the drawing point (4) at a point located between the two ends (7, 8).

4. An assembly as claimed in any one of the preceding claims, **characterized in that** the drawing point (4) is shiftably disposed on the lifting bar (3).

5. An assembly as claimed in claim 4, **characterized in that** the drawing point (4) is mounted on a sleeve-shaped element (6) which is shiftably disposed on the lifting bar (3).

6. An assembly as claimed in claim 1 or 3, **characterized in that** the agricultural machine (2) is fastened to one (7) of the two ends of the drawbar (5), and **in that** there are provided fastening means (9) on the one hand hingeably connected to the other end (8) of the drawbar (5) and on the other hand hingeably connected to the lifting bar (3).

7. An assembly as claimed in claim 6, **characterized in that** the fastening means (9), upon shifting of the drawing point (4), allow the other end (8) of the drawbar (5) to make a movement in which it describes an arc (10) of a circle.

8. An assembly as claimed in claim 1, **characterized in that** the agricultural machine (2) is provided with driven means for shifting the drawing point (4).

9. An assembly as claimed in claim 8, **characterized in that** the agricultural machine (2) is provided with measuring means for measuring the angle enclosed by the drawbar (5) and the lifting bar (3), and **in that** the driven means are controlled with the aid of data from the measuring means.

10. An assembly as claimed in any one of the preceding claims, **characterized in that** the lifting bar (3) is curved, the convex side of the curved lifting bar (3) facing away from one end (7) of the drawbar (5).

11. An agricultural machine (2) provided with a lifting bar (3) with a drawing point (4) and with a drawbar (5) that is fastened to the drawing point (4), said agricultural machine (2) being suitable for use in an assembly as claimed in any one of the preceding claims, **characterized in that** the drawing point (4) is shiftable.
